# EUROPÄISCHE PATENTANMELDUNG

(11) **EP 2 876 416 A1**
(43) Veröffentlichungstag der Anmeldung: **27.05.2015**
(21) Anmeldenummer: 14189820.5
(22) Anmeldetag: 22.10.2014
(51) Int. Cl.: G01D 11/24, G12B 9/02, G12B 17/08

(54) **Sensorvorrichtung und Verfahren zum Herstellen einer Sensorvorrichtung**

(30) Priorität: 22.11.2013 DE 102013223912
(71) Anmelder: ZF Friedrichshafen AG, 88046 Friedrichshafen (DE)
(72) Erfinder: Deichler, Thomas, 92237 Sulzbach-Rosenberg (DE)

(57) **Zusammenfassung**

Die vorliegende Erfindung betrifft eine Sensorvorrichtung (1) sowie ein Verfahren (1000) zum Herstellen einer Sensorvorrichtung (1). Die Sensorvorrichtung (1) umfasst ein Sensorgehäuse (3) zur Aufnahme einer Sensoreinrichtung (20), welche ein Sensorelement umfasst, und ein Steckverbindungsgehäuse (2) zur Aufnahme einer Steckverbindungseinrichtung (9), welche mit der Sensoreinrichtung (20) elektrisch verbindbar ist und einen mit der Sensoreinrichtung (20) elektrisch koppelbaren Steckanschluss zum elektrischen Anschuss der Sensorvorrichtung (1) aufweist, wobei das Sensorgehäuse (3) und das Steckverbindungsgehäuse (2) miteinander verbindbar sind und im verbundenen Zustand relativ zueinander drehbar sind Die Sensorvorrichtung (1) zeichnet sich dadurch aus, dass das Sensorgehäuse (3) und das Steckverbindungsgehäuse (2) über eine bajonettverschlussartige Verbindung (40, 42) miteinander verbindbar sind, welche derart ausgebildet ist, dass das Sensorgehäuse (3) und das Steckverbindungsgehäuse (2) in einer ersten zueinander ausgerichteten Relativposition miteinander verbindbar sind und im verbundenen Zustand in einer zu der ersten Relativposition unterschiedlichen weiteren Relativposition unverlierbar zueinander rotierbar sind.

## Beschreibung

Die vorliegende Erfindung betrifft eine Sensorvorrichtung mit den oberbegrifflichen Merkmalen des Patentanspruchs 1 sowie ein Verfahren zum Herstellen einer Sensorvorrichtung.

Eine gattungsgemäße Sensorvorrichtung ist beispielsweise aus der Offenlegungsschrift DE 102 21 303 A1 bekannt. Die Sensorvorrichtung umfasst ein hohlzylindrisches Sensorgehäuse zur Aufnahme einer Sensoreinrichtung, welche ein Sensorelement aufweist, und ein hohlzylindrisches Steckverbindungsgehäuse zur Aufnahme einer Steckverbindungseinheit, die mit der Sensoreinheit elektrisch koppelbar ist und einen Steckanschluss zum elektrischen Anschluss der Sensorvorrichtung aufweist. Das Steckverbindungsgehäuse weist ferner einen an einem freien stirnseitigen Ende angeordneten Ringabschnitt auf, der von einem freien stirnseitigen Ende des Sensorgehäuses während eines Montagevorganges der Sensorvorrichtung aufgenommen wird und flächig an dem Sensorgehäuse zur Anlage kommt. Anschließend werden das Sensorgehäuse und das Steckverbindungsgehäuse in dem dadurch hergestellten Verbindungsbereich feuchtigkeitsdicht beispielsweise mittels Verschweißen und/oder stoffschlüssiges Fügen miteinander verbunden.

Die Anforderungen an Sensorvorrichtungen beispielsweise für eine Anwendung im Automotiven Bereich steigen stetig. So sollten vorzugsweise eine Richtung des Steckanschlusses bzw. des Steckerabgangs zum elektrischen Anschluss der Sensorvorrichtung, ein Abstand des Sensorelementes zum Steckanschluss sowie eine Lage des Sensorelementes um eine Längsachse eines Sensorträgers individuell einstellbar sein.

Mit der vorliegenden Erfindung soll eine verbesserte Sensorvorrichtung vorgeschlagen werden, welche den genannten stetig steigenden Anforderungen wenigstens teilweise, vorzugsweise vollständig gerecht werden soll.

Dazu schlägt die vorliegende Erfindung nach einem ersten Aspekt eine Sensorvorrichtung vor, welche ein Sensorgehäuse und ein Steckverbindungsgehäuse umfasst. Das Sensorgehäuse ist eingerichtet, eine Sensoreinrichtung, welche ein Sensorelement umfasst, aufzunehmen. Das Steckverbindungsgehäuse ist eingerichtet, eine Steckverbindungseinrichtung aufzunehmen, welche mit der Sensoreinrichtung elektrisch verbindbar ist und einen mit der Sensoreinrichtung elektrisch koppelbaren Steckanschluss zum elektrischen Anschluss der Sensorvorrichtung aufweist. Ferner sind das Sensorgehäuse und das Steckverbindungsgehäuse eingerichtet, miteinander verbunden werden und im verbundenen Zustand relativ zueinander drehbar sein zu können.

Die Sensorvorrichtung zeichnet sich dadurch aus, dass das Sensorgehäuse und das Steckverbindungsgehäuse über eine bajonettverschlussartige Verbindung miteinander verbindbar sind. Die bajonettverschlussartige Verbindung ist dabei derart ausgebildet, dass das Sensorgehäuse und das Steckverbindungsgehäuse in einer ersten zueinander ausgerichteten Relativposition miteinander verbindbar sind und im verbundenen Zustand in einer zu der ersten Relativposition unterschiedlichen weiteren Relativposition unverlierbar zueinander rotierbar sind. Unverlierbar korrespondiert in diesem Zusammenhang zu einer Untrennbarkeit des Sensorgehäuses von dem Steckverbindungsgehäuse in einer Relativposition, die unterschiedlich zu der ersten Relativposition ist. Damit lassen sich das Sensorgehäuse und das Steckverbindungsgehäuse nur in einer einzigen zueinander ausgerichteten Relativposition verbinden bzw. zusammenfügen und wieder lösen. In den zu der ersten Relativposition unterschiedlichen Relativposition sind das Sensorgehäuse und das Steckverbindungsgehäuse nicht ohne weiteres voneinander trennbar. Dadurch kann die Möglichkeit geboten werden, das Sensorgehäuse und das Steckverbindungsgehäuse nach dem Verbinden genau zueinander auszurichten, wobei gewährleistet ist, dass sich das Sensorgehäuse nicht überraschend von dem Steckverbindungsgehäuse löst. Somit kann eine Richtung des Steckanschlusses bzw. des Steckerabgangs im verbundenen Zustand des Sensorgehäuses mit dem Steckverbindungsgehäuse individuell eingestellt werden, ohne dass sich das Sensorgehäuse oder das Steckverbindungsgehäuse von dem anderen Gehäuseteil lösen kann.

Nach einer bevorzugten Ausführungsform der vorliegenden Erfindung ist die bajonettverschlussartige Verbindung derart ausgebildet, dass das Sensorgehäuse und das Steckverbindungsgehäuse im verbundenen Zustand in jeder zu der ersten Relativposition unterschiedlichen weiteren Relativposition unverlierbar zueinander rotierbar sind. Damit können das Sensorgehäuse und das Steckverbindungsgehäuse im verbundenen Zustand unbegrenzt in eine Richtung rotiert werden, ohne dass irgendwann eine Richtungsänderung beispielsweise wegen eines Anschlages vorgenommen werden muss. Dadurch kann die Montage der Sensorvorrichtung sowie die relative Positionierung bzw. Ausrichtung des Sensorgehäuses zu dem Steckverbindungsgehäuse vereinfacht werden.

Gemäß einer weiteren bevorzugten Ausführungsform der vorliegenden Erfindung umfasst die bajonettverschlussartige Verbindung einen ersten Verbindungsabschnitt und einen zweiten Verbindungsabschnitt, wobei der erste und zweite Verbindungsabschnitt jeweils hohlzylindrisch und ineinander steckbar ausgeformt sind. Dazu weist der hohlzylindrische Körper des ersten oder zweiten Verbindungsabschnitts vorzugsweise einen größeren Innendurchmesser als ein Außendurchmesser des hohlzylindrischen Körpers des anderen Verbindungsabschnitts ausgewählt aus dem ersten und zweiten Verbindungsabschnitt auf. Ferner weist der erste Verbindungsabschnitt wenigstens ein von dem ersten Verbindungsabschnitt umfangsseitig radial abragendes Eingreifelement auf. Der zweite Verbindungsabschnitt weist einen umfangsseitig umlaufenden Führungsabschnitt mit wenigstens einer zur Aufnahme des wenigstens einen Eingreifelements ausgebildeten Durchbrechung auf.

Weiter bevorzugt kann der Führungsabschnitt mehr als eine Durchbrechung aufweisen, wobei eine der Anzahl der Durchbrechungen entsprechende Anzahl an Eingreifelementen an dem ersten Verbindungsabschnitt angeordnet ist, wobei die Durchbrechungen und die Eingreifelemente an dem entsprechenden ersten und zweiten Verbindungsabschnitt derart angeordnet sind, dass der erste und zweite Verbindungsabschnitt in ausschließlich einer zueinander ausgerichteten Relativposition miteinander verbindbar sind, wobei die Durchbrechungen zueinander und die Eingreifelemente zueinander derart unterschiedliche Ausmaße aufweisen, dass ein Ausmaß einer Durchbrechung zu genau einem Ausmaß eines Eingreifelements korrespondiert. Dadurch kann gewährleistet werden, dass das Sensorgehäuse und das Steckverbindungsgehäuse weiterhin in nur einer Relativposition miteinander verbindbar und in einer dazu unterschiedlichen weiteren Relativposition relativ zueinander rotierbar sind, während die Gehäuseteile entlang der Verbindungsachse zueinander fixiert sind. Eine entlang der Verbindungsachse wirkende Fixierung liegt vor, sobald das Sensorgehäuse und das Steckverbindungsgehäuse in Verbindungsachsenrichtung unverlierbar miteinander verbunden sind. Eine beispielweise toleranzbedingte oder gewollte begrenzte Relativbewegung des Sensorgehäuses zu dem Steckverbindungsgehäuse entlang der Verbindungsachse kann durchaus möglich oder gewollt sein, ohne die fixierende Eigenschaft aufzuheben.

Weiter bevorzugt ist der Führungsabschnitt durch einen von dem hohlzylindrischen Körper des zweiten Verbindungsabschnitts umfangsseitig radial abragenden Kragen mit einem an den Kragen angrenzenden Führungskanal zur Aufnahme und Führung des Eingreifelements ausgebildet ist. Dabei erstreckt sich der Führungskanal auf einer dem ersten Verbindungsabschnitt abgewandten Seite des Kragens parallel zu dem Kragen.

Vorzugsweise grenzt der Führungsabschnitt an ein freies stirnseitiges Ende des zweiten Verbindungsabschnitts an, wobei das Eingreifelement zur Aufnahme durch den Führungsabschnitt entsprechend an dem ersten Verbindungsabschnitt angeordnet ist. Mit anderen Worten ist die Anordnung des Führungsabschnitts an dem zweiten Verbindungsabschnitt und des Eingreifelements an dem ersten Verbindungsabschnitt derart aufeinander abgestimmt, dass das Eingreifelement im verbunden Zustand des Sensorgehäuses mit dem Steckverbindungsgehäuse von dem Führungsabschnitt über die Durchbrechung aufgenommen ist. Dadurch kann eine einfach und kostengünstig ausgestaltete bajonettverschlussartige Verbindung bereitgestellt, welche den vorbeschriebenen Anforderungen gerecht wird.

Nach einer weiter bevorzugten Ausführungsform weist der erste Verbindungsabschnitt einen den hohlzylindrischen Körper des ersten Verbindungsabschnitts umfangsseitig wenigstens teilweise umlaufenden ersten rippenartigen Vorsprung mit einem daran angrenzenden parallel verlaufenden ersten Aufnahmekanal auf. Der erste Aufnahmekanal ist beabstandet zu dem Eingreifelement angeordnet. Mit anderen Worten ist das Eingreifelement außerhalb des Aufnahmekanals angeordnet. Des Weiteren weist der zweite Verbindungsabschnitt einen den hohlzylindrischen Körper des zweiten Verbindungsabschnitts umfangsseitig wenigstens teilweise umlaufenden zweiten rippenartigen Vorsprung mit einem daran angrenzenden parallel verlaufenden zweiten Aufnahmekanal aufweist. Der zweite Aufnahmekanal ist unter Zwischenlage des zweiten rippenartigen Vorsprungs benachbart zu dem Führungskanal angeordnet. Dabei sind der erste und zweite rippenartige Vorsprung mit dem ersten und zweiten Aufnahmekanal derart ausgelegt und angeordnet, dass im verbundenen Zustand des Sensorgehäuses mit dem Steckverbindungsgehäuse der erste rippenartige Vorsprung in den zweiten Aufnahmekanal und der zweite rippenartige Vorsprung in den ersten Aufnahmekanal eingreift. Dadurch kann in Ergänzung zu der bajonettverschlussartigen Verbindung eine stopfenartige Verbindung zwischen dem Sensorgehäuse und dem Steckverbindungsgehäuse bereitgestellt werden. Damit kann eine zuverlässigere Verbindung zwischen diesen Komponenten erreicht werden.

Weiterhin bevorzugt ist wenigstens die bajonettverschlussartige Verbindung oder die stopfgenartige Verbindung ausgelegt, mittels eines auf die Verbindung zwischen Sensorgehäuse und Steckverbindungsgehäuse gerichteten Fügeprozesses wie beispielsweise ein Verschweißen, eine stoffschlüssige Verbindung zwischen dem Sensorgehäuse und dem Steckverbindungsgehäuse herzustellen. Dadurch kann nach einer endgültigen relativen Positionierung bzw. Ausrichtung des Sensorgehäuses zu dem Steckverbindungsgehäuse eine endgültige, unlösbare Fixierung dieser Gehäuseteile erreicht werden. Ferner kann diese stoffschlüssige Verbindung vorzugsweise dazu eingerichtet sein, den Bereich der Sensoreinrichtung von dem Bereich des Steckanschlusses abzudichten.

Vorzugsweise ragen das Eingreifelement innenumfangsseitig von dem hohlzylindrischen Körper des ersten Verbindungsabschnitts und der Führungsabschnitt außenumfangsseitig von dem hohlzylindrischen Körper des zweiten Verbindungsabschnitts ab. Bevorzugt sind der erste Verbindungsabschnitt mit dem Steckverbindungsgehäuse und der zweite Verbindungsabschnitt mit dem Sensorgehäuse ausgeformt. Vorzugsweise sind das Sensorgehäuse und das Steckverbindungsgehäuse mittels eines Spritzgussverfahrens aus einem kunststoffhaltigen Material ausgeformt. Dies begünstigt die einfache und kostengünstige Herstellung der Gehäuseteile für die Sensorvorrichtung.

Weiterhin bevorzugt sind das Steckverbindungsgehäuse und das Sensorgehäuse eingerichtet, die Sensoreinrichtung und die Steckverbindungseinrichtung bis zu dem Steckanschluss vollständig derart zu umschließen, dass dieser umschlossene Abschnitt gegenüber äußeren Einflüssen geschützt ist. Vorzugsweise sind das Steckverbindungsgehäuse und das Sensorgehäuse eingerichtet, dass der umschlossene Abschnitt wenigstens teilweise oder vollständig mit einer Füll- oder Vergußmasse ausfüllbar ist. So kann vorzugsweise nur das Sensorgehäuse oder nur das Steckverbindungsgehäuse oder beide Gehäuseteile ausfüllbar ausgebildet sein. Das Ausfüllen bewirkt neben einem Schutz der in dem umschlossenen Abschnitt befindlichen Komponenten der Sensorvorrichtung gegenüber äußeren Einflüssen wie Feuchtigkeit und Hitze eine Fixierung der zwischen der Steckverbindungseinrichtung und der Sensoreinrichtung sowie der zwischen dem Steckverbindungsgehäuse und dem Sensorgehäuse eingenommenen Relativposition. Das Ausfüllen der Gehäuseteile kann auf herkömmliche Art und Weise erfolgen, weswegen hierauf nicht näher eingegangen wird.

Nach einer weiteren bevorzugten Ausführungsform weist die Sensoreinrichtung einen Sensorträger auf, der eine Aufnahme zum Tragen des Sensorelementes umfasst. Die Sensoreinrichtung weist ferner vorzugsweise eine Leiterplatte auf, die erste Anschlussstellen zur elektrischen Kontaktierung des Sensorelementes aufweist. Die elektrische Kontaktierung kann vorzugsweise über eine Lötverbindung hergestellt werden. Dazu sind die ersten Anschlussstellen vorzugsweise durch Lötpads ausgebildet, welche mit elektrischen Kontaktelementen, die elektrisch mit dem Sensorelement verbunden sind, elektrisch leitend mittels eines Lötverfahrens verbindbar sind. Insbesondere kann das Sensorelement ein Hallsensor mit drei Anschlüssen sein. Entsprechend sind auf der Leiterplatte drei als erste Anschlussstellen ausgebildete Lötpads angeordnet, die mit den Anschlüssen des Hallsensors elektrisch leitend verbindbar sind. Alternativ dazu kann das Sensorelement ein linearer Hallsensor IC mit beispielsweise vier Anschlüssen sein. Die Leiterplatte weist dementsprechend vier als erste Anschlussstellen ausgebildete Lötpads oder im Allgemeinen vier erste Anschlussstellen zur elektrischen Kontaktierung des Sensorelementes auf.

Vorzugsweise umfasst die Leiterplatte ferner zweite Anschlussstellen, wobei eine zweite Anschlussstelle mit einer ersten Anschlussstelle elektrisch verbunden ist. Elektrisch verbunden oder kontaktiert im Sinne der vorliegenden Erfindung korrespondiert zu einer signalleitenden und/oder stromleitenden Verbindung bzw. Kontakt zwischen zwei Komponenten. Vorzugsweise ist eine Anzahl der ersten Anschlussstellen identisch zu einer Anzahl der zweiten Anschlussstellen. Weiter bevorzugt sind eine erste Anschlussstelle und eine zweite Anschlussstelle durch eine gemeinsame Anschlussleitung ausgeformt, deren freien Enden die jeweilige erste und zweite Anschlussstelle ausbilden.

Die Leiterplatte kann vorzugsweise zudem elektrische Bauelemente aufweisen, welche über mit der Leiterplatte vorgesehene Leiterbahnen elektrisch anbindbar sind. Die Leiterbahnen und/oder Anschlussleitungen können auf einer Oberflächenseite der Leiterplatte oder innerhalb der Leiterplatte angeordnet sein. Die Leiterplatte ist vorzugsweise eine herkömmliche Schaltkreis-Platine von flacher Bauart mit wenigstens den zur elektrischen Verbindung notwendigen ersten und zweiten Anschlussstellen, wobei die jeweilig einander zugeordneten ersten und zweiten Anschlussstellen miteinander elektrisch verbunden sind.

Die Steckverbindungseinrichtung umfasst einen Steckanschluss zum elektrischen Anschluss der Sensorvorrichtung. Bei dem Steckanschluss kann es sich um einen herkömmlichen männlich oder weiblich ausgeformten Stecker zum Anschluss an einen entsprechenden Gegenstecker zum Übertragen der von dem Sensorelement ausgegebenen Signale sowie zur Energieversorgung des Sensorelementes handeln. Die Sensorvorrichtung kann mittels des Steckanschlusses beispielsweise mit einer Auswertevorrichtung, vorzugsweise mit einem Steuergerät wie ein Kraftfahrzeug-Steuergerät signal- und stromleitend verbunden sein. Dadurch lassen sich die von dem Sensorelement ausgegebenen Signale empfangen und auswerten sowie das Sensorelement mit dem notwendigen Betriebsstrom bzw. der notwendigen Betriebsspannung versorgen.

Die Steckverbindungseinrichtung umfasst vorzugsweise mehrere Kontaktelemente mit jeweils einer ersten Kontaktseite und einer zweiten Kontaktseite, wobei die erste und zweite Kontaktseite miteinander elektrisch verbunden sind. Die erste Kontaktseite eines Kontaktelementes ist mit dem Steckanschluss elektrisch verbunden oder verbindbar. Vorzugsweise können die Kontaktelemente durch Steckkontaktelemente ausgebildet sein, welche in eine Steckaufnahme der Steckverbindungseinrichtung zum elektrischen Verbinden mit den Steckkontakten des Steckanschlusses einsetzbar sind. Alternativ oder zusätzlich kann das Kontaktelement mittels einer stoffschlüssigen Verbindung wie beispielsweise einer Lötverbindung mit dem Steckkontakt elektrisch verbunden sein. Die zweite Kontaktseite eines Kontaktelementes ist mit einer der zweiten Anschlussstellen der Leiterplatte elektrisch verbunden. Die elektrische Verbindung kann vorzugsweise kraftschlüssig beispielsweise mittels eines Druckkontakts, formschlüssig beispielsweise mittels eines Steckkontakts oder stoffschlüssig beispielsweise mittels einer Lötverbindung ausgebildet sein. Die aufeinanderfolgende elektrische Verbindung zwischen dem Sensorelement und den ersten Anschlussstellen, zwischen der jeweiligen ersten und zweiten Anschlussstelle, zwischen der jeweiligen zweiten Anschlussstelle und der zweiten Kontaktseite, zwischen der ersten und zweiten Kontaktseite sowie zwischen der ersten Kontaktseite und dem Steckanschluss ermöglicht die Versorgung des Sensorelementes mit einem Betriebsstrom oder mit einer Betriebsspannung sowie der Signalübertragung von dem Sensorelement zu dem Steckanschluss.

Gemäß einer weiteren bevorzugten Ausführungsform der vorliegenden Erfindung ist die Leiterplatte an einem der Steckverbindungseinrichtung zugewandten stirnseitigen Ende des Sensorträgers mit einer ersten Oberflächenseite quer zu einer von der Sensorelement-Aufnahme zu dem stirnseitigen Ende verlaufende Erstreckungsachse des Sensorträgers angeordnet, wobei die zweiten Anschlussstellen über die erste Oberflächenseite elektrisch kontaktierbar sind. Mit anderen Worten sind die zweiten Anschlussstellen vorzugsweise auf der ersten Oberflächenseite elektrisch kontaktierbar angeordnet, oder die zweiten Anschlussstellen sind über in der ersten Oberflächenseite ausgebildete Zugänge elektrisch kontaktierbar, oder wenigstens eine der zweiten Anschlussstellen ist auf der ersten Oberflächenseite elektrisch kontaktierbar angeordnet, wobei die übrigen der zweiten Anschlussstellen jeweils über einen in der ersten Oberflächenseite ausgebildeten Zugang elektrisch kontaktierbar sind. Dadurch kann die Leiterplatte zwischen der Steckverbindungseinrichtung, insbesondere zwischen den Kontaktelementen der Steckverbindungseinrichtung, und dem Sensorträger angeordnet werden, wobei die erste Oberflächenseite der Leiterplatte, über welche die zweiten Anschlussstellen elektrisch kontaktierbar sind, quer zu der Erstreckungsachse angeordnet ist. Weiter bevorzugt ist die erste Oberflächenseite orthogonal zu der Erstreckungsachse angeordnet. Die an dem stirnseitigen Ende des Sensorträgers mögliche Anordnung der Leiterplatte mit den den zweiten Kontaktseiten der Kontaktelemente zugewandten zweiten Anschlussstellen ermöglicht zum einen eine einfache und kostengünstige Längenanpassung der zwischen dem Steckanschluss und den zweiten Anschlussstellen verlaufenden Kontaktelemente, wodurch der Abstand zwischen dem Steckanschluss und dem Sensorelement individuell einstellbar ist, ohne dass weitere Bauteile wie beispielsweise der Sensorträger aufgrund der Längenanpassung mit anzupassen wären. Zum anderen kann der Sensorträger kompakt ausgestaltet werden, wodurch eine kompakte Sensoreinrichtung und damit eine kompakte Sensorvorrichtung bereitstellbar ist.

Vorzugsweise ist der Sensorträger zylindrisch ausgeformt, wobei der Querschnitt kreisförmig, ringförmig, dreieckförmig, rechteckförmig oder vieleckförmig sein kann. Die Sensorelement-Aufnahme wird dabei vorzugsweise über eine Ausnehmung in einer Oberflächenseite des Sensorträgers ausgeformt. Alternativ dazu kann der Sensorträger vorzugsweise als Rahmenelement ausgestaltet sein, wobei die Sensorelement-Aufnahme durch ein als Halterahmen ausgebildetes Rahmenelementteil ausgebildet ist. Weiter bevorzugt ist die Sensorelement-Aufnahme an einer der Leiterplatte abgewandte Stirnseite des Sensorträgers angeordnet. Dadurch kann der Sensorträger einfach und kostengünstig ausgestaltet werden. Der Sensorträger weist ferner eine zwischen der Sensorelement-Aufnahme und den ersten Anschlussstellen der Leiterplatte verlaufende elektrische Verbindung zur elektrischen Verbindung des Sensorelementes mit den ersten Anschlussstellen der Leiterplatte auf. Die elektrische Verbindung kann beispielsweise als Leiterbahn auf dem Sensorträger oder innerhalb des Sensorträgers ausgebildet sein. Dabei entspricht die Anzahl der Leiterbahnen wenigstens der Anzahl der elektrisch zu verbindenden Kontakte des in der Sensorelement-Aufnahme aufnehmbaren Sensorelementes. Weiter bevorzugt sind die Leiterbahnen auf einer zwischen den Stirnseiten des Sensorträgers verlaufende Oberflächenseite angeordnet. Dabei können die Leiterbahnen vorzugsweise in einer auf der Oberflächenseite ausgebildeten Ausnehmung eingelassen sein, wobei die Leiterbahnendicke derart wählbar ist, dass die Leiterbahn eine ein die Ausnehmung begrenzender Abschnitt der Oberflächenseite umfassende Ebene ausgehend von einer zwischen den Stirnseiten verlaufenden Erstreckungsachse radial durchquert, radial plan mit dieser Ebene abschließt oder radial zwischen dieser Ebene und der Erstreckungsachse verläuft.

Nach einer bevorzugten Ausführungsform der vorliegenden Erfindung sind die ersten und zweiten Anschlussstellen der Leiterplatte auf unterschiedlichen Oberflächenseiten der Leiterplatte angeordnet, wobei eine Mehrzahl an zweiten Anschlussstellen auf der ersten Oberflächenseite der Leiterplatte und übrige zweite Anschlussstellen auf einer zu der ersten Oberflächenseite abgewandten zweiten Oberflächenseite der Leiterplatte angeordnet sind, wobei eine der zweiten Anschlussstellen identische Anzahl an ersten Anschlussstellen auf der zweiten Oberflächenseite angeordnet sind. Weiter bevorzugt sind sämtliche zweite Anschlussstellen auf der ersten Oberflächenseite und sämtliche erste Anschlussstellen auf der zweiten Oberflächenseite angeordnet. Dadurch kann eine möglichst flache Bauform der Leiterplatte ermöglicht werden. Die ersten und zweiten Anschlussstellen können dabei vorzugsweise über entsprechende die Leiterplatte durchquerende oder entlang der Leiterplatte verlaufende Anschlussleitungen miteinander elektrisch verbunden sein. Weiter bevorzugt kann die Leiterplatte ein oder mehrere elektrische Bauelemente aufweisen, welche auf der zweiten Oberflächenseite angeordnet sind, wobei der Sensorträger an einem der der zweiten Oberflächenseite gegenüberliegenden stirnseitigen Ende einen Raum zur Aufnahme des oder der elektrischen Bauelemente ausbildet. Der Raum kann weiter bevorzugt in der Form einer einseitig oder mehrseitig offenen Wanne ausgebildet sein, wobei wenigstens eine Wannenseite durch eine Oberflächenseite des Sensorträgers ausgebildet ist. Eine oder weitere Wannenseiten können beispielsweise durch ein den Sensorträger aufnehmendes Sensorgehäuse ausgebildet sein.

Vorzugsweise ist die Leiterplatte mit einer zu der ersten und zweiten Oberflächenseite parallelen Leiterplattenmittenebene parallel zu einer eine Sensorfläche eines von der Sensorelement-Aufnahme aufnehmbaren Sensorelements umfassende Sensorflächenebene angeordnet, wobei die Sensorfläche einem Messobjekt in einem Messbetrieb des Sensorelements gegenüber angeordnet ist. Eine parallele Anordnung umfasst dabei eine unter Berücksichtigung von Toleranzen wie beispielsweise Fertigungstoleranzen bedingte mögliche relative schräge Anordnung der Leiterplattenmittenebene zu der Sensorflächenebene. Vorzugsweise umfasst die Sensoreinrichtung das Sensorelement, welches in der Sensorelement-Aufnahme angeordnet ist.

Gemäß einer weiteren bevorzugten Ausführungsform der vorliegenden Erfindung sind die zweiten Anschlussstellen durch eine der Anzahl der zweiten Kontaktseiten identische oder geringere Anzahl an voneinander elektrisch isolierten, koaxialen ringförmig verlaufenden Leiterbahnen jeweils zum elektrischen Kontakt einer der zweiten Kontaktseiten ausgebildet. Die als ringförmige Leiterbahn ausgebildeten zweiten Anschlussstellen weisen aufgrund ihrer koaxialen Anordnung einen zueinander unterschiedlichen Radius auf. Die elektrische Isolierung kann über die Leiterplatte erfolgen, welche herkömmlicherweise aus einem elektrisch isolierenden Material hergestellt ist. Eine eine Kontaktfläche für die zweite Kontaktseite definierende Ausdehnung der Ringform kann abhängig von einer Kontaktbreite der zweiten Kontaktseite gewählt sein. Beispielsweise kann die radiale Ausdehnung der Ringform größer oder gleich der Kontaktbreite der zweiten Kontaktseite gewählt sein. Alternativ dazu kann vorzugsweise die radiale Ausdehnung kleiner als die Kontaktbreite der zweiten Kontaktseite gewählt sein. Für diesen Fall ist es bevorzugt, die Kontaktfläche der zweiten Anschlussstelle erhaben auf der ersten Oberflächenseite vorzusehen. Die Kontaktfläche weist somit einen vorbestimmten Abstand zu der ersten Oberflächenseite auf. Dies kann beispielsweise durch Ausbildung der zweiten Anschlussstelle mit einer entsprechend zu der ersten Oberflächenseite verlaufenden Dicke bzw. Tiefe erreicht werden. Dadurch kann ein zuverlässiger elektrischer Kontakt zwischen den zweiten Anschlussstellen und den zweiten Kontaktseiten gewährleistet werden. Ferner ermöglicht die ringförmige Ausbildung der zweiten Anschlussstellen eine individuell einstellbare Positionierung der Sensoreinrichtung relativ zu der Steckverbindungseinrichtung um eine zwischen der Sensorelement-Aufnahme und der Leiterplatte verlaufende Längsachse der Sensoreinrichtung.

Die die zweiten Anschlussstellen ausbildenden ringförmigen Leiterbahnen können auf der ersten Oberflächenseite der Leiterplatte angeordnet sein. Alternativ dazu oder zusätzlich können die die zweiten Anschlussstellen ausbildenden ringförmigen Leiterbahnen quer zu der ersten Oberflächenseite in einer ringförmigen Ausnehmung der Leiterplatte angeordnet sein, wobei die jeweilige ringförmige Ausnehmung ausgebildet ist, eine zweite Kontaktseite aufzunehmen. Ein radial außerhalb der ringförmigen Ausnehmung angeordneter Abschnitt der Leiterplatte kann dabei beispielweise mittels wenigstens einem die ringförmige Ausnehmung radial querenden Verbindungsstegs mit dem radial inneren Leiterplattenabschnitt verbunden sein.

Weiter bevorzugt sind die jeweiligen ringförmigen zweiten Anschlussstellen durch eine Schleifkontaktbahn ausgebildet, wobei eine der jeweiligen Schleifkontaktbahn zugeordnete zweite Kontaktseite eines Kontaktelementes einen Schleifkontakt ausformt. Weiterhin bevorzugt bildet die zweite Kontaktseite wenigstens eine L-Form aus, wobei der kurze Schenkel der L-Form eine Kontaktfläche für den Schleifkontakt mit der Schleifkontaktbahn ausformt. Dadurch können die Sensoreinrichtung und die Steckverbindungseinrichtung während eines elektrischen Kontaktzustandes relativ zueinander positioniert werden, wobei zusätzlich eine bereits eingenommene Relativposition verändert werden kann. Weiterhin bevorzugt ist der elektrische Kontakt zwischen der zweiten Anschlussstelle und der zweiten Kontaktseite nach Einnahme einer endgültigen Relativposition der Sensoreinrichtung zu der Steckverbindungseinrichtung mittels einer stoffschlüssigen Verbindung wie beispielsweise mittels eines Lötverfahrens sicherbar oder gesichert.

Nach einer weiteren bevorzugten Ausführungsform der vorliegenden Erfindung weist die Steckverbindungseinrichtung ein Positionierungselement und die Leiterplatte eine Positionierungselementaufnahme auf, wobei die Positionierungselementaufnahme koaxial zu einer Mittenachse der Leiterplatte zur drehbeweglichen Aufnahme eines freien Endes des Positionierungselementes ausgebildet ist. Dadurch kann ein elektrischer Kontakt zwischen den zweiten Anschlussstellen und den zweiten Kontaktseiten der Kontaktelemente zuverlässig hergestellt und eine Relativposition zwischen der Sensoreinrichtung und der Steckverbindungseinrichtung einfacher individuell eingestellt werden.

Weiter bevorzugt ist das Positionierungselement durch ein Kontaktelement ausgebildet, das mittels einer die Positionierungselementaufnahme wenigstens teilweise überlappenden zweiten Anschlussstelle mit dem Sensorelement elektrisch verbindbar ist. Im Sinne der vorliegenden Erfindung korrespondiert ein wenigstens teilweises Überlappen der Positionierungsaufnahme durch die zweite Anschlussstelle zu einem wenigstens teilweisen Verschluss eines von der Positionierungsaufnahme ausgebildeten Durchganges durch die zweite Anschlussstelle. Beispielsweise kann sich die zweite Anschlussstelle quer zu der Aufnahmerichtung der Positionierungselementaufnahme innerhalb oder außerhalb der Positionierungsaufnahme erstrecken. Alternativ dazu kann die zweite Anschlussstelle an einem umlaufenden Innenrand der Positionierungselementaufnahme angeordnet sein, wobei der umlaufende Innenrand einen Durchmesser der Positionierungselementaufnahme definiert. Weiter bevorzugt ist das Halteelement in einer die zweiten Kontaktseiten der Kontaktelemente aufweisenden Hälfte der Kontaktelemente angeordnet.

Gemäß einer weiteren bevorzugten Ausführungsform der vorliegenden Erfindung sind die Kontaktelemente mittels eines zwischen der ersten und zweiten Kontaktseite der Kontaktelemente angeordneten Halteelements ortsfest zueinander gehalten. Dadurch kann eine exakte Positionierung der zweiten Kontaktseiten zu den zweiten Anschlussstellen sowie ein zuverlässiger elektrischer Kontakt zwischen den zweiten Kontaktseiten und den zweiten Anschlussstellen gewährleistet werden. Weiter bevorzugt ist das Halteelement aus einem kunststoffhaltigen Material ausgeformt und beispielsweise mittels eines Spritzgußverfahrens an den Kontaktelementen angeformt. Weiterhin bevorzugt ist gleichfalls das Positionierungselement von dem Halteelement ortsfest zu den Kontaktelementen gehalten. Die vorerwähnte Positionierung kann dadurch weiter begünstigt werden.

Vorzugsweise sind die Kontaktelemente wenigstens in einem die zweite Kontaktseite ausbildenden Abschnitt und weiter bevorzugt wenigstens in einem von dem Steckanschluss abragenden Abschnitt stabförmig ausgeformt. Die Kontaktelemente können in dem stabförmig ausgeformten Abschnitt vorzugsweise jede denkbare Querschnittsform aufweisen. Beispielsweise kann der Querschnitt kreisförmig, dreieckig, rechteckig oder vieleckig sein, wobei der kreisförmige und rechteckige Querschnitt aus Kosten- und Stabilitätsgründen bevorzugt ist.

Nach einem weiteren Aspekt der vorliegenden Erfindung wird ein Drehzahlsensor vorgeschlagen, der eine wie vorbeschriebene Sensorvorrichtung umfasst. Weiter bevorzugt sind die Sensoreinrichtung und die Steckverbindungseinrichtung unter Zwischenlage der Leiterplatte miteinander elektrisch verbunden sind. Dadurch kann ein die vorbeschriebenen Vorteile aufweisender Drehzahlsensor bereitgestellt werden, welcher zum Detektieren wenigstens einer Drehzahl und/oder einer Drehrichtung eines rotierenden Bauteils beispielsweise im Automotiven Bereich verwendet werden kann.

Gemäß einem weiteren Aspekt der vorliegenden Erfindung wird ein Verfahren zum Herstellen einer Sensorvorrichtung vorgeschlagen. Dabei kann es sich vorzugsweise um eine wie vorbeschriebene Sensorvorrichtung handeln. Die Sensorvorrichtung weist ein erstes Gehäuseteil und ein zweites Gehäuseteil auf, wobei das zweite Gehäuseteil mit dem ersten Gehäuseteil über eine bajonettverschlussartige Verbindung verbindbar ist. Die bajonettverschlussartige Verbindung ist derart eingerichtet, dass das erste und zweite Gehäuseteil in einer ersten zueinander ausgerichteten Relativposition miteinander verbindbar sind und im verbundenen Zustand in einer zu der ersten Relativposition unterschiedlichen weiteren Relativposition unverlierbar zueinander rotierbar sind. Das Verfahren weist einen ersten Schritt des relativen Ausrichtens des ersten Gehäuseteils zu dem zweiten Gehäuseteil aufweist, wobei das erste Gehäuseteil in eine erste Relativposition zu dem zweiten Gehäuseteil verbracht wird, einen zweiten Schritt des Verbindens des ersten Gehäuseteils mit dem zweiten Gehäuseteil in der ersten Relativposition und einen dritten Schritt des relativen Rotierens des ersten Gehäuseteils zu dem zweiten Gehäuseteil aus der ersten Relativposition in eine dazu unterschiedliche weitere Relativposition. Bei dem ersten und zweiten Gehäuseteil handelt es sich vorzugsweise um das Sensorgehäuse und das Steckverbindungsgehäuse, wobei das Sensorgehäuse das erste Gehäuseteil und das Steckverbindungsgehäuse das zweite Gehäuseteil oder umgekehrt ausbilden können.

Mittels des vorgeschlagenen Verfahrens lässt sich eine Sensorvorrichtung, insbesondere ein eine solche Sensorvorrichtung umfassender Drehzahlsensor mit den vorbeschriebenen Vorteilen bereitstellen.

Weitere Merkmale und Vorteile der Erfindung ergeben sich aus der nachfolgenden Beschreibung von bevorzugten Ausführungsbeispielen der Erfindung, anhand der Figuren und Zeichnungen, die erfindungswesentliche Einzelheiten zeigen, und aus den Patentansprüchen. Die einzelnen Merkmale können je einzeln für sich oder zu mehreren in beliebiger Kombination bei einer bevorzugten Ausführungsform der Erfindung verwirklicht sein.

Bevorzugte Ausführungsbeispiele der Erfindung werden nachfolgend anhand der beigefügten Zeichnungen näher erläutert. Es zeigen:
- Fig. 1: eine perspektivische Ansicht einer Sensorvorrichtung nach einem weiteren bevorzugten Ausführungsbeispiel;
- Fig. 2A bis 2C: eine schematische Draufsicht auf eine in Fig. 1 gezeigte Sensorvorrichtung in unterschiedlichen Relativpositionen eines Steckverbindungsgehäuses zu einem Sensorgehäuse;
- Fig. 3: eine perspektivische Ansicht einer Sensorvorrichtung nach einem bevorzugten Ausführungsbeispiel;
- Fig. 4: eine schematische Seitenansicht der in Fig. 1 gezeigten Sensorvorrichtung;
- Fig. 5: eine Schnittansicht entlang der in Fig. 4 gezeigten Schnittlinie V-V;
- Fig. 6: eine Schnittansicht entlang der in Fig. 5 gezeigten Schnittlinie VI-VI;
- Fig. 7: eine Schnittansicht entlang der in Fig. 5 gezeigten Schnittlinie VII-VII;
- Fig. 8: eine perspektivische Ansicht der in Fig. 3 gezeigten Sensorvorrichtung ohne Sensorgehäuse;
- Fig. 9: eine vergrößerte Ansicht des in Fig. 8 gezeigten Ausschnittsbereichs A; und
- Fig. 10: ein Ablaufdiagramm eines Verfahrens zum Herstellen einer Sensorvorrichtung nach einem bevorzugten Ausführungsbeispiel.

In der nachfolgenden Beschreibung bevorzugter Ausführungsbeispiele der vorliegenden Erfindung werden für die in den verschiedenen Figuren dargestellten und gleich oder ähnlich wirkende Elemente gleiche oder ähnliche Bezugszeichen verwendet, wobei auf eine detaillierte wiederholte Beschreibung dieser Elemente verzichtet wird.

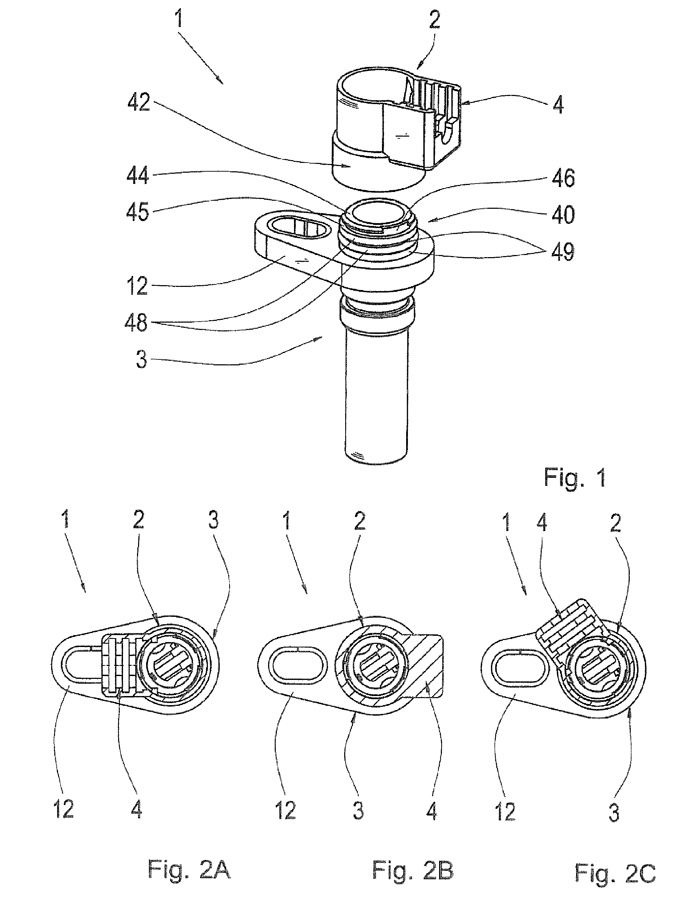

Fig. 1 zeigt eine perspektivische Ansicht einer Sensorvorrichtung 1 nach einem bevorzugten Ausführungsbeispiel. Die Sensorvorrichtung 1 umfasst ein Steckverbindungsgehäuse 2 und ein Sensorgehäuse 3. Das Steckverbindungsgehäuse 2 und das Sensorgehäuse 3 sind aus einem kunststoffhaltigen Material beispielsweise mittels eines Spritzgußverfahrens ausgeformt. Das Sensorgehäuse 3 weist an einem dem Steckverbindungsgehäuse 2 zugewandten Ende einen von einer Halterung 12 abragenden ersten Verbindungsabschnitt 40 auf, der hohlzylindrisch ausgebildet ist und an einem freien stirnseitigen Ende einen von dem hohlzylindrischen Körper 41 des ersten Verbindungsabschnitts 40 radial abragenden, den hohlzylindrischen Körper 41 umfangsseitig umlaufenden Kragen 44 mit einer Durchbrechung 46 aufweist, wobei eine zu der Halterung 12 weisende Kragenoberflächenseite einen parallel zu dem Kragen verlaufenden, radial nach außen offenen Kanal 45 begrenzt. Der Kragen 44 und der Kanal 45 sind Teil einer bajonettverschlussartigen Verbindung, wobei der Kragen 44 einen Führungsabschnitt und der Kanal 45 einen Führungskanal für den ersten Verbindungsabschnitt 40 ausformt.

Das Steckverbindungsgehäuse 2 weist endseitig an einem dem Sensorgehäuse 3 zugewandten Ende einen mit dem ersten Verbindungsabschnitt 40 in Eingriff bringbaren bzw. verbindbaren zweiten Verbindungsabschnitt 42 auf. Der zweite Verbindungsabschnitt 42 ist hohlzylindrisch ausgebildet und eingerichtet, auf den ersten Verbindungsabschnitt 40 aufgesteckt zu werden, wobei der erste Verbindungsabschnitt 40 den zweiten Verbindungsabschnitt 42 umfangsseitig einfasst. Der zweite Verbindungsabschnitt 42 weist als Teil der bajonettverschlussartigen Verbindung ein nicht dargestelltes Eingreifelement auf, welches von einem Innenrand des hohlzylindrischen Körpers des zweiten Verbindungsabschnitts 42 radial nach innen abragt. Das Eingreifelement kann stiftartig ausgebildet sein. Das Eingreifelement und die Durchbrechung 46 sind derart aufeinander abgestimmt, dass das Eingreifelement beim Aufstecken des zweiten Verbindungsabschnitts 42 auf den ersten Verbindungsabschnitt 40 über die Durchbrechung 46 in den Führungskanal 45 führbar ist. Des Weiteren sind das Eingreifelement, die Durchbrechung 46, der Kragen 44 und der Führungskanal 45 derart aufeinander abgestimmt, dass das Eingreifelement im verbundenen Zustand des ersten Verbindungsabschnitts 40 mit dem zweiten Verbindungsabschnitt 42 während einer Drehbewegung des ersten Verbindungsabschnitts 40 relativ zu dem zweiten Verbindungsabschnitt 42 parallel zu dem Kragen 44 in dem Führungskanal 45 ungehindert bewegbar ist. Dadurch sind das Sensorgehäuse 3 und das Steckverbindungsgehäuse 2 nur in einer Relativposition zueinander verbindbar bzw. lösbar und im verbundenen Zustand in einer dazu unterschiedlichen Relativposition unverlierbar relativ zueinander drehbar. Damit kann eine bedarfsgerechte Ausrichtung des Sensorgehäuses 3 relativ zu dem Steckverbindungsgehäuse 2 gewährleistet werden.

Zwischen dem Führungskanal 45 und einer dem Führungskanal 45 zugewandten Oberflächenseite der Halterung 12 weist der erste Verbindungsabschnitt 40 zwei in Erstreckungsrichtung des ersten Verbindungsabschnitts 40 angeordnete zueinander beabstandete und den hohlzylindrischen Körper 41 umfangsseitig durchgängig umlaufende erste rippenartige Vorsprünge 48 auf, wobei der dem Führungskanal 45 nahe erste rippenartige Vorsprung 48 an den Führungskanal 45 angrenzt bzw. eine der Kragenoberflächenseite gegenüberliege Begrenzung für den Führungskanal 45 ausbildet. Zwischen den beiden ersten rippenartigen Vorsprüngen 48 und zwischen dem der Halterung 12 nahen ersten rippenartigen Vorsprung 48 und einer diesem zugewandten Oberflächenseite der Halterung 12 wird jeweils ein erster Aufnahmekanal 49 ausgeformt, der radial nach außen offen ist. Radial nach außen korrespondiert zu einer von einer Längsachse des jeweiligen hohlzylindrischen Körpers 41, 43 wegweisenden Richtung. Die beiden ersten rippenartigen Vorsprünge 48 und die beiden ersten Aufnahmekanäle 49 sind Bestandteil einer stopfenartigen Verbindung, die angrenzend zu der bajonettverschlussartigen Verbindung angeordnet ist.

Der zweite Verbindungsabschnitt 42 kann einen das Eingreifelement einfassenden ebenen bzw. flachen Innenrand aufweisen, wobei ein durch den Innenrand definierter Innendurchmesser des zweiten Verbindungsabschnitts 42 derart gewählt sein kann, dass der zweite Verbindungsabschnitt 42 im aufgesetzten Zustand über einen Presssitz auf den ersten rippenartigen Vorsprüngen 48 anliegt, wobei der Presssitz derart gewählt ist, dass eine relative Drehbewegung des Sensorgehäuses 3 zu dem Steckverbindungsgehäuse 2 weiterhin möglich ist.

Alternativ dazu kann der zweite Verbindungsabschnitt 42 an dem Innenrand zwischen dem Eingreifelement und dem stirnseitigen freien Ende eine Negativform der ersten rippenartigen Vorsprünge 48 und der Aufnahmekanäle 49 des ersten Verbindungsabschnitts 40 aufweisen. Die ersten rippenartigen Vorsprünge 48 und die Aufnahmekanäle 49 sind dabei zu den entsprechend innenseitig des zweiten Verbindungsabschnitts 42 angeordneten zweiten rippenartigen Vorsprüngen und zweiten Aufnahmekanälen derart aufeinander abgestimmt, dass die jeweiligen ersten rippenartigen Vorsprünge 148 und zweiten rippenartigen Vorsprünge in die jeweiligen im verbundenen Zustand des Sensorgehäuses 3 mit dem Steckverbindungsgehäuse 2 dazu gegenüberliegenden ersten 45 und zweiten Aufnahmekanäle eingreifen. Dadurch kann eine haltbarere Verbindung zwischen dem Sensorgehäuse 3 und dem Steckverbindungsgehäuse 2 geschaffen werden.

Das Sensorgehäuse 3 und das Steckverbindungsgehäuse 2 sind eine Verbindungskombination einer bajonettverschlussartigen Verbindung und einer stopfenartigen Verbindung miteinander verbindbar. Diese Verbindungskombination ist jedoch nicht zwingend. Wesentlich ist die bajonettverschlussartige Verbindung, welche als einzige Verbindung zum Verbinden des Sensorgehäuses 3 mit dem Steckverbindungsgehäuse 2 genügt.

Die rippenartige Vorsprünge an dem ersten 40 und/oder zweiten Verbindungsabschnitt 42 können ferner dazu hergenommen werden, eine stoffschlüssige Verbindung zwischen dem ersten Verbindungsabschnitt 40 und dem zweiten Verbindungsabschnitt 42 herzustellen, welche beispielsweise über ein Schweißverfahren wie beispielsweise einem Laserschweißverfahren erzielt werden kann. Die rippenartigen Vorsprünge sind dementsprechend auszulegen.

Das Steckverbindungsgehäuse 2 weist ferner eine Steckanschluss-Aufnahme 4 zur Aufnahme eines Steckanschlusses zum elektrischen Anschluss der Sensorvorrichtung 1 auf. Die Steckanschluss-Aufnahme 4 ist querschnittlich U-förmig ausgebildet und weist mehrere von dem Grund der U-Form ausgehende parallele, zueinander gleichmäßig beabstandete Rippen auf. Der nicht dargestellte Steckanschluss weist eine der Innenseite der U-Form der Steckanschluss-Aufnahme 4 entsprechende Negativform auf. Dadurch kann der Steckanschluss aus nur einer Richtung in die Steckanschluss-Aufnahme 4 eingesetzt werden, wobei der aufgenommene Steckanschluss durch die U-Form und die Rippen in einer zu der Einsetzrichtung quer verlaufenden Richtung fixiert ist.

Fig. 2A bis 2C zeigen eine schematische Draufsicht auf eine in Fig. 1 gezeigte Sensorvorrichtung 1 in unterschiedlichen Relativpositionen des Steckverbindungsgehäuses 2 zu dem Sensorgehäuse 3. Fig. 2A zeigt eine erste Relativposition des Steckverbindungsgehäuses 2 zu dem Sensorgehäuse 3. Die erste Relativposition korrespondiert zu einer Verbindungsposition, bei welcher das Steckverbindungsgehäuse 2 auf das Sensorgehäuse 3 aufsetzbar oder wieder abnehmbar ist. Fig. 2B und 2C zeigen eine zweite und dritte Relativposition des Steckverbindungsgehäuses 2 zu dem Sensorgehäuse 3. In der zweiten und dritten Relativposition ist das Steckverbindungsgehäuse 2 unverlierbar mit dem Sensorgehäuse 3 in Aufsteck- und Abnehmrichtung verbunden, wobei das Steckverbindungsgehäuse 2 und das Sensorgehäuse 3 weiterhin relativ zueinander drehbeweglich sind.

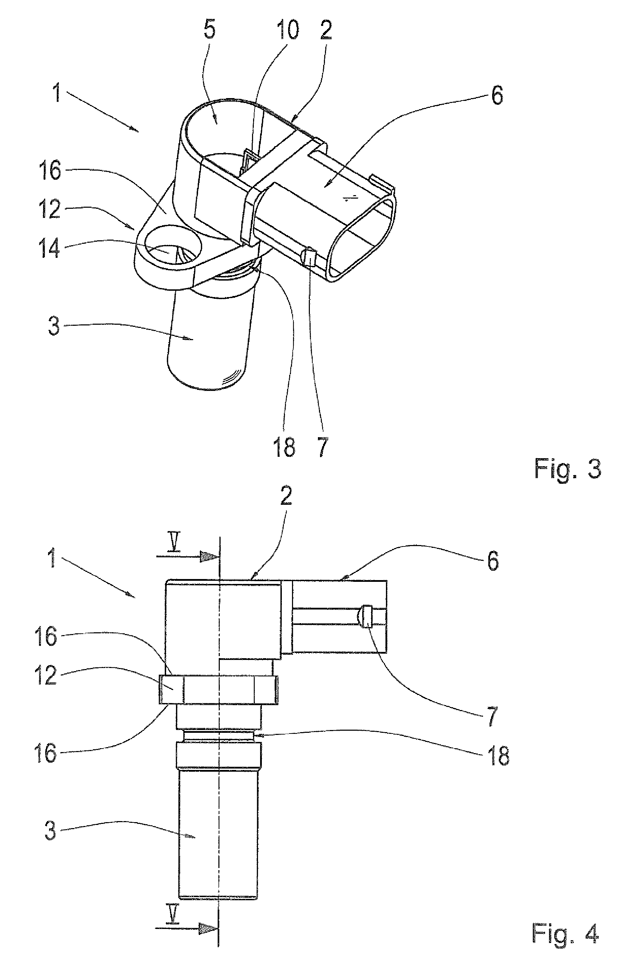

Fig. 3 zeigt eine perspektivische Ansicht einer Sensorvorrichtung 1 nach einem weiteren bevorzugten Ausführungsbeispiel. Die Sensorvorrichtung 1 umfasst ein Steckverbindungsgehäuse 2, das L-förmig ausgebildet ist und an seinen in Erstreckungsrichtung liegenden Endabschnitten jeweils einen Verbindungsabschnitt aufweist, an welchen ein Sensorgehäuses 3 und ein Steckanschluss 6 angebunden sind. Die Anbindung des Sensorgehäuses 3 an das Steckverbindungsgehäuse 2 kann wie vorbeschrieben erfolgen, wobei bei diesem bevorzugten Ausführungsbeispiel das Sensorgehäuse 3 auf dem Steckverbindungsgehäuse 2 aufgesteckt ist. Das Steckverbindungsgehäuse 2 weist im Verbindungsbereich der Schenkel der L-Form einen Öffnungsabschnitt 5 auf. Über den Öffnungsabschnitt 5 erstreckt sich ein von außerhalb der Sensorvorrichtung 1 frei zugängliches Kontaktelement 10 von dem Steckanschluss 6 in das Sensorgehäuse 3. Ein über das Kontaktelement 10 geführtes Signal ist während eines Betriebszustandes der Sensorvorrichtung 1 über den Öffnungsabschnitt 5 von außerhalb der Sensorvorrichtung 1 elektrisch abgreifbar bzw. prüfbar. Das Kontaktelement 10 gehört zu einer Gruppe von Kontaktelementen 10, die ein in dem Sensorgehäuse 3 anordbare Sensoreinrichtung mit dem Steckanschluss 6 elektrisch verbinden, wobei sich nur das eine Kontaktelement 10 frei zugänglich in dem Öffnungsabschnitt 5 erstreckt.

Der Steckanschluss 6 weist an seinem freien, dem Steckverbindungsgehäuse 2 abgewandten Ende einen elektrischen Anschluss für einen Gegenstecker auf. Zum Koppeln mit dem Gegenstecker sind auf einer äußeren Oberflächenseite des Steckanschlusses 6 gegenüberliegend angeordnete Rastelemente 7 vorgesehen. Mittels des Steckanschlusses 6 kann ein Sensorsignal der Sensorvorrichtung 1 beispielsweise an eine Auswerteschaltung oder ein Steuergerät übertragen werden. Ferner kann die Sensorvorrichtung 1 mit einer zum Betrieb notwendigen Betriebsspannung oder einem Betriebsstrom versorgt werden.

Die Sensorvorrichtung 1 weist ferner eine wie mit dem eingangs beschriebenen bevorzugten Ausführungsbeispiel gleichartige Halterung 12 zur Befestigung der Sensorvorrichtung 1 an einem vorbestimmten Ort wie beispielsweise in einem Kraftfahrzeug zum Detektieren einer Drehzahl oder einer Drehrichtung einer rotierenden Kraftfahrzeugkomponente auf. Die Halterung 12 ragt seitlich von der Sensorvorrichtung 1 ab und weist einen Durchgang 14 auf, in welchen ein Befestigungselement einbringbar ist, wobei der Durchgang 14 von einer Anlagefläche 16 zur Anlage an einem Bauteil, an welchem die Sensorvorrichtung 1 zu befestigen ist, begrenzt ist.

Des Weiteren weist die Sensorvorrichtung 1 einen Aufnahmeabschnitt 18 zur Aufnahme eines Dichtringes in der Form eines O-Ringes auf, wobei der Aufnahmeabschnitt mit dem zylindrischen Sensorgehäuse 3 ausgebildet ist. Dies ermöglicht eine Abdichtung einer das Sensorgehäuse 3 umgebenden Region gegenüber einer auf der anderen Seite des Aufnahmeabschnitts 18 den übrigen Bereich der Sensorvorrichtung 1 umgebenden Region bei Anordnung der Sensorvorrichtung 1 mit dem Aufnahmeabschnitt 18 und einem darin aufgenommenen Dichtring in einer dafür vorgesehenen Aufnahme an dem vorbestimmten Befestigungsort.

Das Steckverbindungsgehäuse 2, das Sensorgehäuse 3, der Steckanschluss 6 und die Halterung 12 sind vorzugsweise aus einem kunststoffhaltigen Material ausgebildet. Beispielsweise können diese Komponenten durch ein Spritzgussverfahren hergestellt sein. Dadurch kann die Sensorvorrichtung kostengünstig und einfach ausgebildet werden.

Fig. 4 zeigt eine schematische Seitenansicht der in Fig. 3 gezeigten Sensorvorrichtung 1, aus welcher explizit die L-förmige Gestalt der Sensorvorrichtung 1 und des Steckverbindungsgehäuses 2 erkennbar ist.

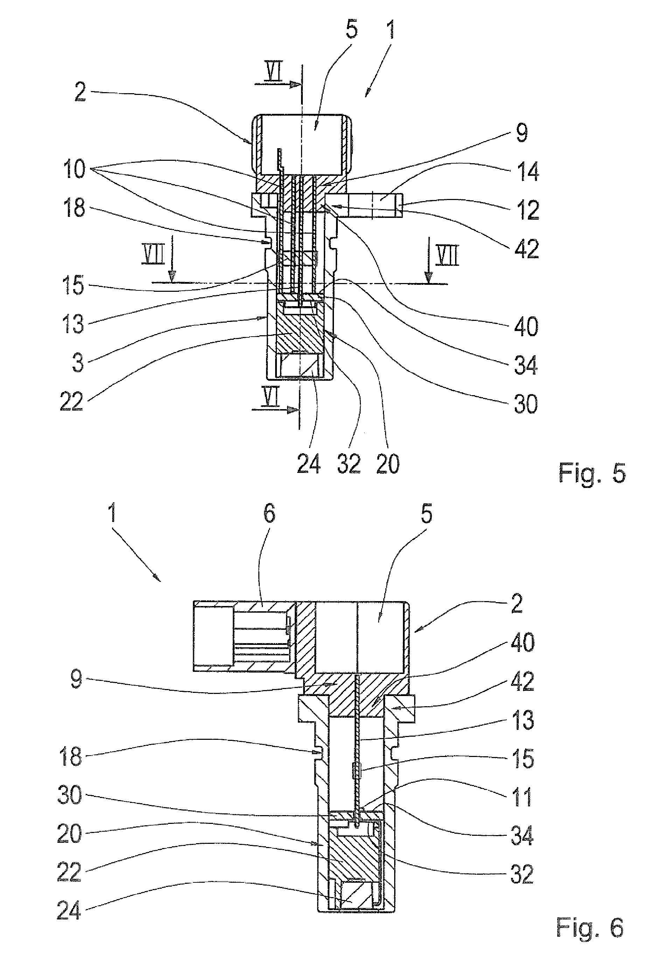

Fig. 5 zeigt eine Schnittansicht entlang der in Fig. 4 gezeigten Schnittlinie V-V. Fig. 6 zeigt eine Schnittansicht entlang der in Fig. 5 gezeigten Schnittlinie VI-VI. Wie in diesen Figuren dargestellt, ist das Sensorgehäuse 3 als einseitig offener Hohlzylinder ausgeformt, wobei das offene Ende von dem Steckverbindungsgehäuse 2 verschlossen ist. Dazu weisen das Sensorgehäuse 3 und das Steckverbindungsgehäuse 2 in gegenüberliegenden Endbereichen ineinandergreifende, wie vorbeschriebene erste und zweite Verbindungsabschnitte 40, 42 auf.

Der Hohlraum des Sensorgehäuses 3 formt einen Aufnahmeraum zur Aufnahme von einer Sensoreinrichtung 20 zuordbaren Komponenten aus. Die Sensoreinrichtung 20 umfasst einen Sensorträger 22 mit einer Sensorelement-Aufnahme, die an einem stirnseitigen Ende des Sensorträgers 22 angeordnet ist. In der Fig. 5 ist ein Sensorelement 24 in der Sensorelement-Aufnahme 22 angeordnet gezeigt. Der Sensorträger 22 ist im Bereich des geschlossenen Endes des Hohlraumes derart angeordnet, dass das Sensorelement 24 unmittelbar dem geschlossenen Ende des Hohlraumes gegenüberliegt. Das geschlossene Ende des Hohlraumes ist durch eine Sensorgehäusewand ausgebildet, deren Dicke entlang einer Sensierrichtung des Sensorelementes 24 derart gewählt ist, dass das Sensorelement 24 unter Berücksichtigung üblicher Abweichungen und Messtoleranzen sensierfähig ist.

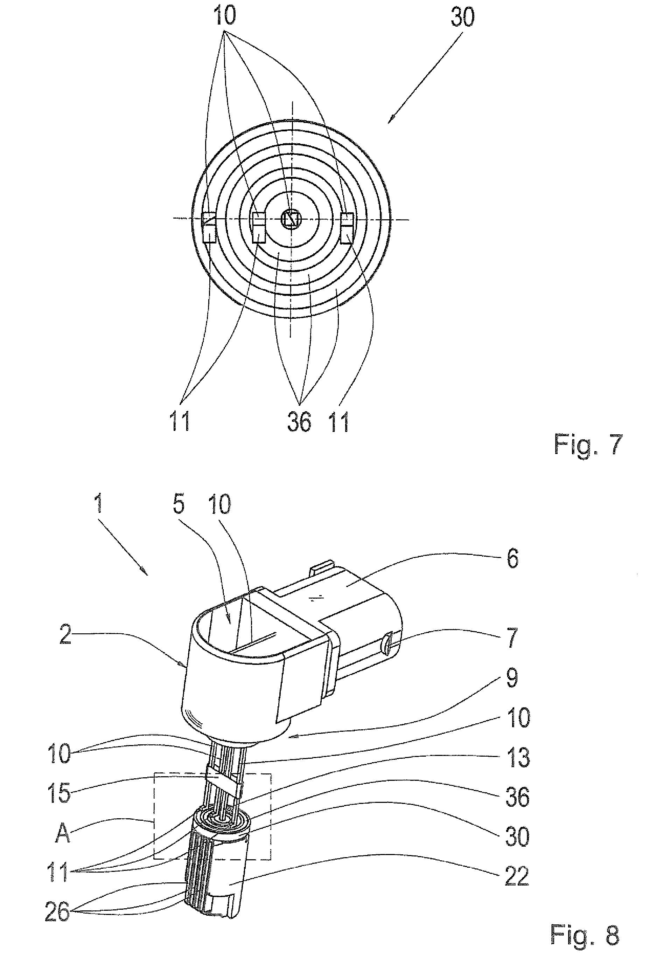

An einem dem Sensorelement 24 bzw. der Sensorelement-Aufnahme abgewandten stirnseitigen Ende des Sensorträgers 22 ist eine Leiterplatte 30 angeordnet, die bei diesem bevorzugten Ausführungsbeispiel in der Form einer Kreisscheibe ausgebildet ist. Die Leiterplatte 30 ist mit dem Sensorträger 22 beispielsweise über eine Klebe-, Rast- oder Lötverbindung gekoppelt. Die Leiterplatte 30 ist eine herkömmliche Leiterplatte aus einem elektrisch isolierenden Material, welche Leiterbahnen zur elektrischen Kontaktierung und Signalübertragung aufweist. Im Besonderen weist die Leiterplatte 30 auf einer dem Sensorträger 22 zugewandten Oberflächenseite 32 erste Anschlussstellen zum elektrischen Kontakt mit an dem Sensorträger 22 stirnseitig angeordneten Kontakten 26 auf, die sich bis zu der Sensorelement-Aufnahme erstrecken und einen elektrischen Anschluss mit den Anschlüssen des Sensorelementes 24 herstellen (Fig. 8). Auf der dem Sensorträger 22 abgewandten Oberflächenseite 34 weist die Leiterplatte 30 zweite Anschlussstellen 36 auf, welche die zum Steckanschluss 6 führenden Kontaktelemente 10 elektrisch kontaktieren (Fig. 7). Dabei sind jeweilig zugeordnete erste und zweite Anschlussstellen 36 mittels einer Anschlussleitung miteinander elektrisch verbunden, wobei die Anschlussleitungen durch die oder in oder auf der Leiterplatte 30 verlaufen.

Die Sensorvorrichtung 1 weist eine der Anzahl der Anschlüsse des Sensorelements 24 entsprechende Anzahl an Kontaktelementen 10, an ersten und zweiten Anschlussstellen 36 sowie an sich von den ersten Anschlussstellen zu den Anschlüssen des Sensorelementes 24 erstreckenden Kontakten 26 auf.

Die Sensorvorrichtung 1 umfasst ferner eine Steckverbindungseinrichtung 9, die von dem Steckverbindungsgehäuse 2 aufgenommen ist. Die Steckverbindungseinrichtung 9 umfasst die Kontaktelemente 10 sowie den Steckanschluss 6, wobei der Steckanschluss 6 und die Kontaktelemente 10 von dem Steckverbindungsgehäuse 2 abragen. Jedes Kontaktelement 10 weist eine erste Kontaktseite, die mit dem Steckanschluss 6 elektrisch verbunden ist, und eine zweite Kontaktseite 11, die mit den zweiten Anschlussstellen 36 verbunden ist, auf, wobei sich die Kontaktelemente 10 von der ersten Kontaktseite bis zu der zweiten Kontaktseite 11 durchgängig erstrecken, wodurch eine zuverlässige elektrische Verbindung zwischen dem Steckanschluss 6 und der Leiterplatte 30 gewährleistet ist.

Die Steckverbindungseirichtung 9 umfasst ferner ein Positionierungselement 13, welches sich parallel zu den Kontaktelementen 10 in einem von dem abragenden Abschnitt des Steckverbindungsgehäuses 2 erstreckt und im verbundenen Zustand des Sensorgehäuses 3 mit dem Steckverbindungsgehäuse 2 koaxial zu einer Längsachse des hohlzylinderförmigen Sensorgehäuses 3 angeordnet ist. Ein dem Steckverbindungsgehäuse 2 abgewandtes Ende des Positionierungselements 13 ragt in einem mittigen Durchlass der Leiterplatte 30 hinein. Mittels des Positionierungselements 13 kann auf einfache Weise ein zuverlässiger elektrischer Kontakt zwischen den zweiten Kontaktseiten 11 und den zweiten Anschlussstellen 36 hergestellt und zudem eine zuverlässige Ausrichtung der Steckverbindungseinrichtung 9 zu der Sensoreinrichtung 20 erzielt werden. Die Kontaktelemente 10 und das Positionierungselement 13 werden mittels eines Halteelements 15 ortsfest zueinander fixiert. Das Halteelement 15 ist in einem von dem Steckverbindungsgehäuse 2 abragenden Abschnitt der Kontaktelemente 10 und des Positionierungselements 13 an diesen angeordnet. Beispielsweise kann das Halteelement 15 mittels eines Spritzgußverfahrens an diesen Komponenten angebracht werden.

Fig. 7 zeigt eine Schnittansicht entlang der in Fig. 5 gezeigten Schnittlinie VII-VII, wobei die erste Oberflächenseite 34 der Leiterplatte 30 in einer Draufsicht dargestellt ist. Auf der ersten Oberflächenseite 34 sind die zweiten Anschlussstellen 36 angeordnet. Die zweiten Anschlussstellen 36 sind jeweils als ringförmige Leiterbahn ausgebildet, die ausgehend von einem gemeinsamen Mittelpunkt einen unterschiedlichen Radius zueinander aufweisen. Der gemeinsame Mittelpunkt der ringförmigen Leiterbahnen korrespondiert zu einem Mittelpunkt der kreisförmigen Leiterplatte 30. Die zweiten Anschlussstellen 36 sind durch den jeweiligen unterschiedlichen Radius und der damit einhergehenden zueinander beabstandeten Anordnung voneinander elektrisch isoliert. Die zweiten Anschlussstellen 36 formen eine Schleifkontaktleiterbahn aus, auf welcher die jeweilige zweite Kontaktseite 11 der Kontaktelemente 10 einen elektrischen Schleifkontakt herstellt. Die Kontaktelemente 10 sind stabförmig mit einem rechteckigen Querschnitt ausgeformt, wobei ein die jeweilige zweite Kontaktseite 11 aufweisender Endbereich L-förmig ausgebildet ist, wobei die zweite Kontaktseite 11 durch den kurzen Schenkel der L-Form ausgeformt ist. Die zweite Kontaktseite 11 bildet dabei eine Schleifkontaktfläche auf einer der zweiten Anschlussstelle 36 zugewandten Oberflächenseite des kurzen Schenkels aus. Die zweiten Anschlussstellen 36 können als Lötpads ausgebildet sein, um eine stoffschlüssige Verbindung mit den jeweilig zugeordneten zweiten Kontaktseiten 11 nach Abschluss einer relativen Positionierung der Sensoreinrichtung 20 zu der Steckverbindungseinrichtung 9 beispielsweise mittels eines Lötverfahrens herzustellen. Dadurch kann der elektrische Kontakt zwischen den zweiten Anschlussstellen 36 und den jeweilig zugeordneten zweiten Kontaktseiten 11 fixiert bzw. gesichert werden.

Das Positionierungselement 13 kann gleichfalls ein Kontaktelement 10 ausformen, wobei das Positionierungselement 13 dann eine mit dem Steckanschluss 6 elektrisch verbundene erste Kontaktseite und ein mit einer zweiten Anschlussstelle 36 elektrisch verbundene zweite Kontaktseite aufweist. Der elektrische Kontakt mit der zugeordneten zweiten Anschlussstelle kann innerhalb des mittigen Durchlasses der Leiterplatte 30 oder auf der dem Sensorträger 22 zugewandten Oberflächenseite 32 der Leiterplatte 30 erfolgen. Beispielsweise kann die zweite Anschlussstelle in den Durchlass hineinragen, an einem Innenrand des Durchlasses als ringförmige Schleifkontaktbahn angeordnet oder den Durchlass auf der dem Sensorträger 22 zugewandten Oberflächenseite 32 der Leiterplatte 30 queren. Dadurch kann die Anzahl der von dem Steckverbindungsgehäuse 2 abragenden Elemente reduziert und die Sensorvorrichtung 1 weiter vereinfacht werden.

Fig. 8 zeigt eine perspektivische Ansicht der in Fig. 3 gezeigten Sensorvorrichtung 1 ohne Sensorgehäuse 3. Wie aus der Figur ersichtlich, ist der Sensorträger 22 aus einem zylindrischer Körper ausgebildet, wobei sich die Kontakte 26 von dem stirnseitigen Ende mit der Sensorelement-Aufnahme zu dem gegenüberliegenden stirnseitigen Ende, an dem die Leiterplatte 30 angeordnet ist, entlang einer die stirnseitigen Enden verbindenden Oberflächenseite erstrecken. Dazu ist die Oberflächenseite des Sensorträgers 22 eben bzw. flach ausgebildet. Dadurch können die Kontakte 26 durch Ausstanzteile ausgebildet werden, die parallel zueinander angeordnet sind, sich entlang der Oberflächenseite geradlinig und voneinander beabstandet erstrecken und in den jeweiligen stirnseitigen Endbereich zur elektrischen Kontaktierung hinein gebogen sind. Der Sensorträger 22 sowie die Kontakte 26 können dadurch kostengünstig hergestellt werden. Der Sensorträger 22 ist dazu aus einem kunststoffhaltigen Material mit elektrischen Isolationseigenschaften ausgeformt. Der Sensorträger 22 kann in einem der Leiterplatte 30 zugewandten stirnseitigen Endbereich einen Raum zur Aufnahme von elektronischen Bauteilen aufweisen, die auf der zweiten Oberflächenseite 32 der Leiterlatte 30 anordbar sind. Die Leiterplatte 30 weist für diesen Fall entsprechende Leiterbahnen zur elektrischen Kontaktierung der elektronischen Bauteile auf. Die Leiterplatte 30 ist ferner mit der ersten Oberflächenseite 34 und der zweiten Oberflächenseite 32 quer, im Besonderen orthogonal zu einer sich von der Sensorelement-Aufnahme zu dem stirnseitigen Ende des Sensorträgers 22 erstreckenden Erstreckungsachse angeordnet.

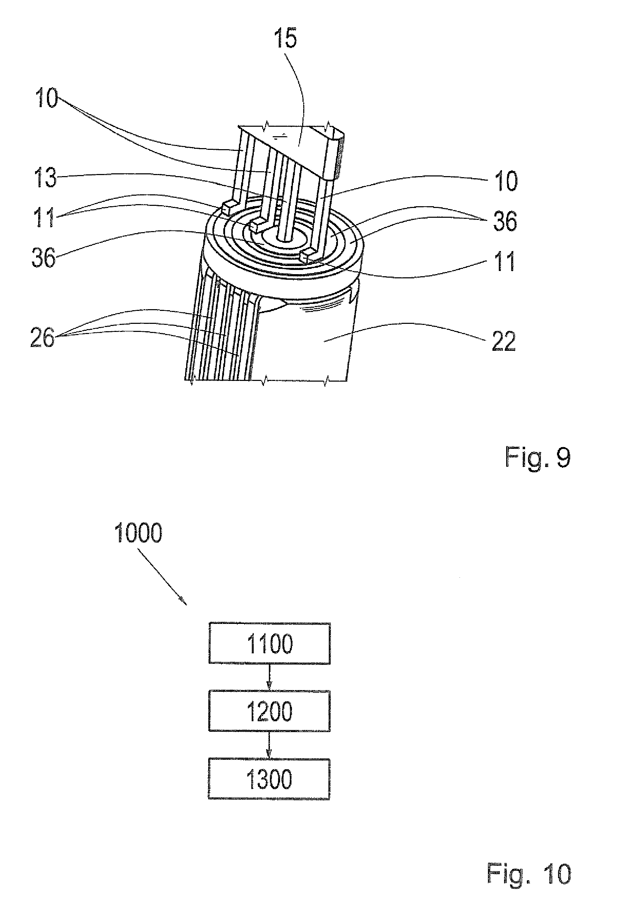

Fig. 9 zeigt eine vergrößerte Ansicht des in Fig. 8 gezeigten Ausschnittsbereichs A. Wie in der Fig. 9 dargestellt, sind die zweiten Anschlussstellen 36 auf der ersten Oberflächenseite 34 der Leiterplatte 30 derart angeordnet, dass die Schleifkontaktfläche der zweiten Anschlussstellen 36 mit Blick auf die erste Oberflächenseite 34 erhaben bzw. erhöht liegt. Dadurch kann sichergestellt werden, dass die zweiten Kontaktseiten 11 ausschließlich die zweiten Anschlussstellen 36 kontaktieren. Damit kann eine Reibungswirkung bei einer bedarfsgerechten Ausrichtung der Sensoreinrichtung 20 zu der Steckverbindungseinrichtung 9 verringert werden. Ferner ist das Halteelement 15 nahe den zweiten Kontaktseiten 11 angeordnet. Damit wird im Bereich der zweiten Kontaktseiten 11 eine erhöhte Stabilität erreicht, wodurch einer auf die zweiten Kontaktseiten 11 einwirkenden Hebelwirkung bei der bedarfsgerechten Positionierung entgegengewirkt werden kann.

Fig. 10 zeigt ein Ablaufdiagramm eines Verfahrens 1000 zum Herstellen einer Sensorvorrichtung nach einem bevorzugten Ausführungsbeispiel. Dabei kann es sich beispielsweise um eine wie vorbeschriebene Sensorvorrichtung 1 handeln. Die Sensorvorrichtung 1 weist ein erstes Gehäuseteil 2, welches beispielsweise das Steckverbindungsgehäuse 2 sein kann, und ein zweites Gehäuseteil 3, welches beispielsweise das Sensorgehäuse 3 sein kann, auf, wobei das zweite Gehäuseteil 3 mit dem ersten Gehäuseteil 2 über eine beispielsweise wie vorbeschriebene bajonettverschlussartige Verbindung 40, 42 verbindbar ist, wobei die bajonettverschlussartige Verbindung 40, 42 derart ausgelegt ist, dass das erste und zweite Gehäuseteil 2, 3 in einer ersten zueinander ausgerichteten Relativposition miteinander verbindbar sind und im verbundenen Zustand in einer zu der ersten Relativposition unterschiedlichen weiteren Relativposition unverlierbar zueinander rotierbar sind. Das Verfahren 1000 weist einen ersten Schritt 1100 des relativen Ausrichtens des ersten Gehäuseteils 2 zu dem zweiten Gehäuseteil 3 auf, wobei das erste Gehäuseteil 2 in eine erste Relativposition zu dem zweiten Gehäuseteil 3 verbracht wird. Ferner weist das Verfahren 1000 einen zweiten Schritt 1200 des Verbindens des ersten Gehäuseteils 2 mit dem zweiten Gehäuseteil 3 in der ersten Relativposition und einen dritten Schritt 1300 des relativen Rotierens des ersten Gehäuseteils 2 zu dem zweiten Gehäuseteil 3 aus der ersten Relativposition in eine dazu unterschiedliche weitere Relativposition auf.

Die mit den bevorzugten Ausführungsbeispielen beschriebene Sensorvorrichtung kann vorzugsweise als Drehzahlsensor in einem Kraftfahrzeug zum Detektieren einer Drehzahl und/oder einer Drehrichtung eines rotierenden Elementes hergenommen werden. Die beschriebene Sensorvorrichtung kann in weiteren Anwendungsbereichen, in denen wenigstens eine Drehzahlerfassung oder Drehrichtungserfassung erforderlich ist, eingesetzt werden, wobei die Sensorvorrichtung zur Auswertung der Signale und zur Energieversorgung über den Steckanschluss mit einer Auswerteschaltung oder ähnliches zu verbinden ist.

Die beschriebenen und in den Figuren gezeigten Ausführungsbeispiele sind nur beispielhaft gewählt. Unterschiedliche Ausführungsbeispiele können vollständig und in Bezug auf einzelne Merkmale miteinander kombiniert werden. Auch kann ein Ausführungsbeispiel durch ein oder mehrere Merkmale eines weiteren Ausführungsbeispiels ergänzt werden. Die Abmessungen der geometrischen Form der beschriebenen Elemente sind nur beispielhaft und können entsprechend angepasst werden.

### Bezugszeichen

- 1: Sensorvorrichtung
- 2: Steckverbindungsgehäuse
- 3: Sensorgehäuse
- 4: Steckanschluss-Aufnahme
- 5: Öffnungsabschnitt
- 6: Steckanschluss
- 7: Rastelement
- 9: Steckverbindungseinrichtung
- 10: Kontaktelement
- 11: zweite Kontaktseite
- 12: Halterung
- 13: Positionierungselement
- 14: Durchgang
- 15: Halteelement
- 16: Anlagefläche
- 18: Dichtring-Aufnahmeabschnitt
- 20: Sensoreinrichtung
- 22: Sensorträger
- 24: Sensorelement
- 26: Kontakt
- 30: Leiterplatte
- 32: zweite Oberflächenseite
- 34: erste Oberflächenseite
- 36: zweite Anschlussstellen
- 40: erster Verbindungsabschnitt
- 42: zweiter Verbindungsabschnitt
- 44: Kragen
- 45: Führungskanal
- 46: Durchbrechung
- 48: erster rippenartiger Vorsprung
- 49: erster Aufnahmekanal
- 1000: Verfahren
- 1100: erster Schritt
- 1200: zweiter Schritt
- 1300: dritter Schritt

## Patentansprüche

1. Sensorvorrichtung (1) umfassend ein Sensorgehäuse (3) zur Aufnahme einer Sensoreinrichtung (20), welche ein Sensorelement umfasst, und ein Steckverbindungsgehäuse (2) zur Aufnahme einer Steckverbindungseinrichtung (9), welche mit der Sensoreinrichtung (20) elektrisch verbindbar ist und einen mit der Sensoreinrichtung (20) elektrisch koppelbaren Steckanschluss zum elektrischen Anschuss der Sensorvorrichtung (1) aufweist, wobei das Sensorgehäuse (3) und das Steckverbindungsgehäuse (2) miteinander verbindbar sind und im verbundenen Zustand relativ zueinander drehbar sind, **dadurch gekennzeichnet, dass** das Sensorgehäuse (3) und das Steckverbindungsgehäuse (2) über eine bajonettverschlussartige Verbindung (40, 42) miteinander verbindbar sind, welche derart ausgebildet ist, dass das Sensorgehäuse (3) und das Steckverbindungsgehäuse (2) in einer ersten zueinander ausgerichteten Relativposition miteinander verbindbar sind und im verbundenen Zustand in einer zu der ersten Relativposition unterschiedlichen weiteren Relativposition unverlierbar zueinander rotierbar sind.

2. Sensorvorrichtung (1) nach Anspruch 1, **dadurch gekennzeichnet, dass** die bajonettverschlussartige Verbindung derart ausgebildet ist, dass das Sensorgehäuse (3) und das Steckverbindungsgehäuse (2) im verbundenen Zustand in jeder zu der ersten Relativposition unterschiedlichen weiteren Relativposition unverlierbar zueinander rotierbar sind.

3. Sensorvorrichtung (1) nach Anspruch 1 oder 2, **dadurch gekennzeichnet, dass** die bajonettverschlussartige Verbindung (40, 42) einen ersten Verbindungsabschnitt (40) und einen zweiten Verbindungsabschnitt (42) umfasst, wobei der erste und zweite Verbindungsabschnitt (40, 42) jeweils hohlzylindrisch und ineinander steckbar ausgeformt sind, wobei der erste Verbindungsabschnitt (40) wenigstens ein von dem ersten Verbindungsabschnitt (40) umfangsseitig radial abragendes Eingreifelement aufweist und wobei der zweite Verbindungsabschnitt (42) einen umfangsseitig umlaufenden Führungsabschnitt (44) mit wenigstens einer zur Aufnahme des wenigstens einen Eingreifelements ausgebildeten Durchbrechung (46) aufweist.

4. Sensorvorrichtung (1) nach Anspruch 3, **dadurch gekennzeichnet, dass** der Führungsabschnitt (46) durch einen von dem hohlzylindrischen Körper (43) des zweiten Verbindungsabschnitts (42) umfangsseitig radial abragenden Kragen (44) mit einem an den Kragen (44) angrenzenden Führungskanal (45) zur Aufnahme und Führung des Eingreifelements ausgebildet ist, wobei sich der Führungskanal (45) auf einer dem ersten Verbindungsabschnitt (40) abgewandten Seite des Kragens (44) parallel zu dem Kragen (44) erstreckt.

5. Sensorvorrichtung (1) nach Anspruch 3 oder 4, **dadurch gekennzeichnet, dass** der Führungsabschnitt (44) an ein freies stirnseitiges Ende des zweiten Verbindungsabschnitts (42) angrenzt, und dass das Eingreifelement zur Aufnahme durch den Führungsabschnitt (44) entsprechend an dem ersten Verbindungsabschnitt (40) angeordnet ist.

6. Sensorvorrichtung (1) nach einem der vorherigen Ansprüche, **dadurch gekennzeichnet, dass** der erste Verbindungsabschnitt (40) einen den hohlzylindrischen Körper (41) des ersten Verbindungsabschnitts (40) umfangsseitig wenigstens teilweise umlaufenden ersten rippenartigen Vorsprung (48) mit einem daran angrenzenden parallel verlaufenden ersten Aufnahmekanal (49) aufweist, welcher beabstandet zu dem Eingreifelement angeordnet ist, dass der zweite Verbindungsabschnitt (42) einen den hohlzylindrischen Körper (43) des zweiten Verbindungsabschnitts (42) umfangsseitig wenigstens teilweise umlaufenden zweiten rippenartigen Vorsprung mit einem daran angrenzenden parallel verlaufenden zweiten Aufnahmekanal aufweist, welcher unter Zwischenlage des zweiten rippenartigen Vorsprungs zu dem Führungskanal (45) benachbart angeordnet ist, wobei der erste (48) und zweite rippenartige Vorsprung mit dem ersten (49) und zweiten Aufnahmekanal derart ausgelegt und angeordnet sind, dass im verbundenen Zustand des Sensorgehäuses (3) mit dem Steckverbindungsgehäuse (2) der erste rippenartige Vorsprung (48) in den zweiten Aufnahmekanal und der zweite rippenartige Vorsprung in den ersten Aufnahmekanal (49) eingreift.

7. Sensorvorrichtung (1) nach einem der Ansprüche 3 bis 6, **dadurch gekennzeichnet, dass** das Eingreifelement innenumfangsseitig von dem hohlzylindrischen Körper (41) des ersten Verbindungsabschnitts (40) und der Führungsabschnitt (44) außenumfangsseitig von dem hohlzylindrischen Körper (43) des zweiten Verbindungsabschnitts (42) abragt.

8. Verfahren (1000) zum Herstellen einer Sensorvorrichtung (1), insbesondere nach einem der vorherigen Ansprüche, wobei die Sensorvorrichtung (1) ein erstes Gehäuseteil (2) und ein zweites Gehäuseteil (3) aufweist, wobei das zweite Gehäuseteil (3) mit dem ersten Gehäuseteil (2) über eine bajonettverschlussartige Verbindung verbindbar ist, wobei die bajonettverschlussartige Verbindung derart ausgelegt ist, dass das erste und zweite Gehäuseteil (2, 3) in einer ersten zueinander ausgerichteten Relativposition miteinander verbindbar sind und im verbundenen Zustand in einer zu der ersten Relativposition unterschiedlichen weiteren Relativposition unverlierbar zueinander rotierbar sind, wobei das Verfahren (1000) einen ersten Schritt (1100) des relativen Ausrichtens des ersten Gehäuseteils (2) zu dem zweiten Gehäuseteil (3) aufweist, wobei das erste Gehäuseteil (2) in eine erste Relativposition (A) zu dem zweiten Gehäuseteil (3) verbracht wird, einen zweiten Schritt (1200) des Verbindens des ersten Gehäuseteils (2) mit dem zweiten Gehäuseteil (3) in der ersten Relativposition (A) und einen dritten Schritt (1300) des relativen Rotierens des ersten Gehäuseteils (2) zu dem zweiten Gehäuseteil (3) aus der ersten Relativposition in eine dazu unterschiedliche weitere Relativposition.
